Europäisches Patentamt

European Patent Office

Office européen des brevets

(19)

(11) Numéro de publication: **0 075 636**

**A1**

# (12) DEMANDE DE BREVET EUROPEEN

(21) Numéro de dépôt: 81401502.0

(22) Date de dépôt: 29.09.81

(51) Int. Cl.³: **A 01 G 27/00**

(43) Date de publication de la demande:
06.04.83 Bulletin 83/14

(84) Etats contractants désignés:
AT BE CH DE GB IT LI LU NL SE

(71) Demandeur: Journe, Philippe
19 rue Paul Bert
F-10100 Romilly-sur-Seine(FR)

(72) Inventeur: Journe, Philippe
19 rue Paul Bert
F-10100 Romilly-sur-Seine(FR)

(74) Mandataire: Bonnetat, Christian et al,
Cabinet PROPI Conseils 23 rue de Léningrad
F-75008 Paris(FR)

(54) Dispositif pour irriguer des plantes en pots.

(57) Dispositif d'irrigation de plantes en pot (4) comportant une réserve d'eau (9, 11) et une mèche (10) assurant une communication capillaire entre ledit réservoir (9, 11) et ledit pot (4).

Selon l'invention, ce dispositif est caractérisé en ce que ladite mèche (10) relie la réserve d'eau (9, 11) à la partie supérieure du pot (4).

Grâce au fait que l'alimentation en eau se fait par le dessus du pot (4), les racines des plantes sont mieux irriguées dans la totalité du volume de pot et il est possible de déplacer ledit pot.

Fig 1

EP 0 075 636 A1

<u>Dispositif pour irriguer des plantes en pots.</u>

La présente invention concerne un dispositif pour irriguer des plantes en pots.

On connaît déjà des dispositifs pour l'irrigation de plantes comportant une réserve d'eau dans laquelle lesdites plantes puisent la quantité d'eau nécessaire à leur croissance. Parfois, la communication entre les plantes et la réserve d'eau s'effectue au moyen d'une mèche grâce à laquelle l'apport d'eau se fait par capillarité.

Cependant, dans tous les dispositifs connus, l'alimentation en eau se fait par le dessous des plantes. Il en résulte que, dans le cas d'une culture en terre notamment, la partie inférieure des pots est irriguée normalement, alors que la partie supérieure de ceux-ci est trop sèche, l'eau ne pouvant monter jusqu'à cette partie supérieure. Cet effet nuisible est renforcé du fait que, sous l'effet des rayons solaires, la partie supérieure des pots est échauffée.

Ainsi, non seulement une température élevée est transmise à travers la partie supérieure sèche du pot aux racines des plantes, mais encore les racines supérieures de celles-ci ne sont pas normalement irriguées. Il en résulte un taux de mortalité élevé des plantes, dont les racines ne peuvent utiliser qu'une partie du volume des pots.

La présente invention a pour objet de remédier à ces inconvénients. Elle concerne un dispositif permettant une irrigation correcte de la totalité du volume d'un pot dans lequel se trouve une plante.

2

A cette fin, selon l'invention, le dispositif d'irrigation de plantes en pot comportant une réserve d'eau et une mèche assurant une communication capillaire entre ladite réserve et ledit pot, est remarquable en ce que ladite mèche relie la réserve d'eau à la partie supérieure du pot.

Ainsi, par l'utilisation d'une mèche, on est sûr d'obtenir la bonne irrigation de la partie supérieure des pots, puisqu'une telle mèche permet un équilibre entre les pots et la réserve d'eau.

Par ailleurs, dans les dispositifs connus, un même pot peut contenir une seule plante, ou bien une pluralité de plantes formant un ensemble décoratif selon le goût de l'utilisateur Cependant, si l'on désire modifier entièrement ou en partie, cet ensemble décoratif de plantes, il est nécessaire de procéder à des manipulations longues et salissantes. Ceci est particulièrement désagréable pour les particuliers comme pour les personnes, telles que les fleuristes, appelées à manipuler un grand nombre de plantes et à les disposer dans des récipients.

En effet, ces personnes doivent interrompre leur manipulation, à l'arrivée d'un client par exemple, les obligeant à se nettoyer les mains.

Aussi, selon un mode de réalisation préféré, la présente invention permet de créer et de modifier, partiellement ou totalement, un ensemble de plantes de façon rapide et propre, lesdites plantes ne nécessitant dans le cadre de la mise en oeuvre de l'invention, qu'un entretien minime grâce à leurs moyens permettant leur alimentation continue en eau par le dessus.

Dans un mode de réalisation préféré, le dispositif est caractérisé en ce qu'il est constitué d'un bloc, par exemple de matière synthétique, comportant au moins un alvéole dont les parois sont conformées de façon à constituer le logement récepteur d'au moins un pot individuel, au moins une capacité interne apte à recevoir une réserve d'eau et une pluralité de mèches en contact avec ladite réserve d'eau par une extrémité et avec la partie supérieure interne du pot par l'autre extrémité et aptes à transférer par capillarité l'eau depuis la réserve vers chaque pot individuel.

Avantageusement, le dispositif peut être constitué d'un bloc en matière synthétique expansée.

Suivant un mode avantageux de réalisation, le dispositif est constitué d'un plateau inférieur à bords relevés, dont le fond forme une réserve d'eau, associé à un corps de préférence cylindrique, de section quelconque et comportant les alvéoles formant les logements desdits pots individuels.

De préférence, le corps cylindrique, comporte une pluralité d'alvéoles, de forme tronconique, aptes à recevoir chacun un pot encastré dans un logement de forme sensiblement complémentaire.

Suivant une variante de réalisation de l'invention, le dispositif comporte au moins une cheminée, traversant ledit corps, reliant la partie supérieure dudit corps et la capacité formant une réserve d'eau, contenant au moins une mèche dont l'extrémité inférieure est immergée dans ladite réserve d'eau et dont l'extrémité supérieure libre, débouche à la partie supérieure d'au moins certains des pots.

Avantageusement, le dispositif comporte des moyens de calage permettant d'ajuster les dimensions de l'alvéole au pot correspondant.

De préférence, le plateau comporte des moyens, tel qu'un trop-plein, empêchant l'eau contenue dans la capacité de dépasser un niveau donné.

Le corps peut comporter à sa base une partie rétrécie apte à être emboîtée à force à l'intérieur des bords du plateau.

Selon un exemple d'application du dispositif selon l'invention, celui-ci est associé à au moins une maquette représentant des éléments architecturaux, de paysage et/ou de personnages en intégrant les plantes contenues dans les pots dans un ensemble décoratif et éducatif.

Les figures annexées feront bien comprendre comment l'invention peut être réalisée.

La figure 1 représente une coupe schématique du dispositif selon l'invention.

La figure 2 est une vue partielle, suivant la flèche de la figure 1, du dispositif.

La figure 3 est une coupe partielle suivant l'axe III-III de la figure 2.

Les figures 4,5 et 6 représentent en vue de dessus des exemples de réalisation du dispositif selon l'invention.

Les figures 7 et 8 représentent un alvéole, muni de moyens de calage, vu respectivement de dessus et en coupe.

5

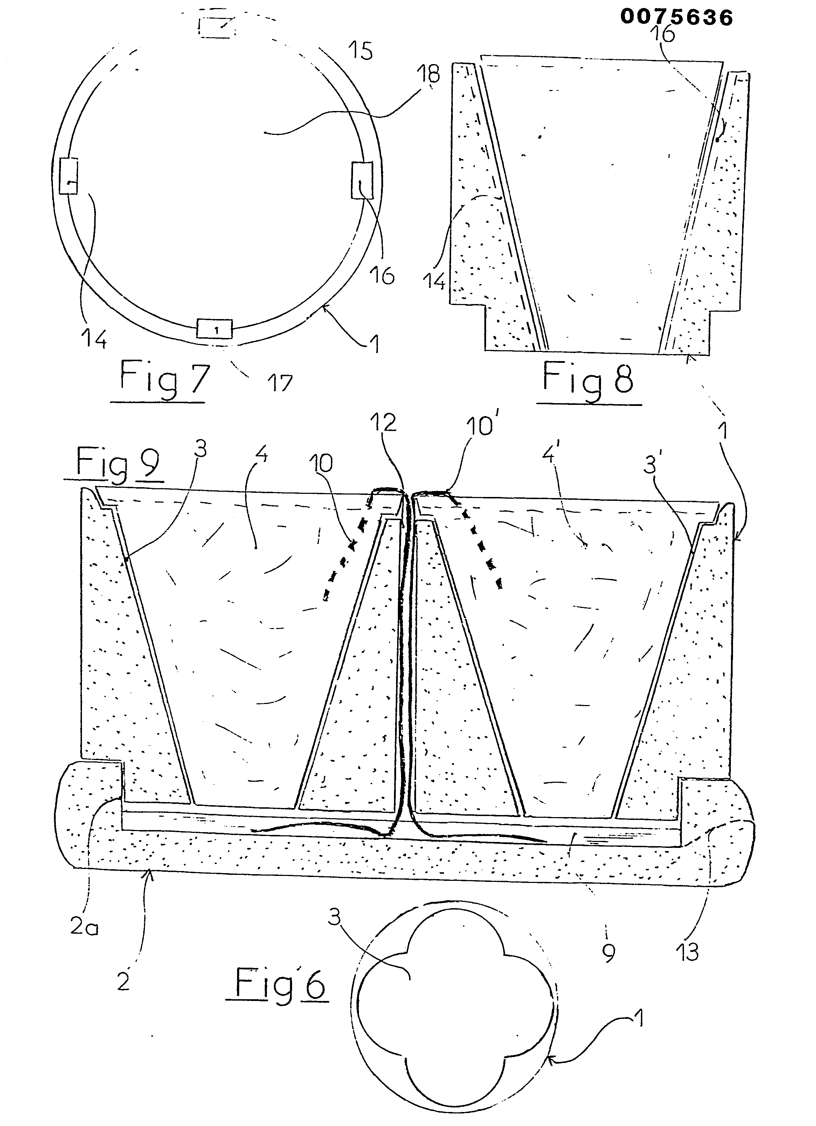

.La figure 9 représente une coupe d'une variante de réalisation du dispositif selon l'invention.

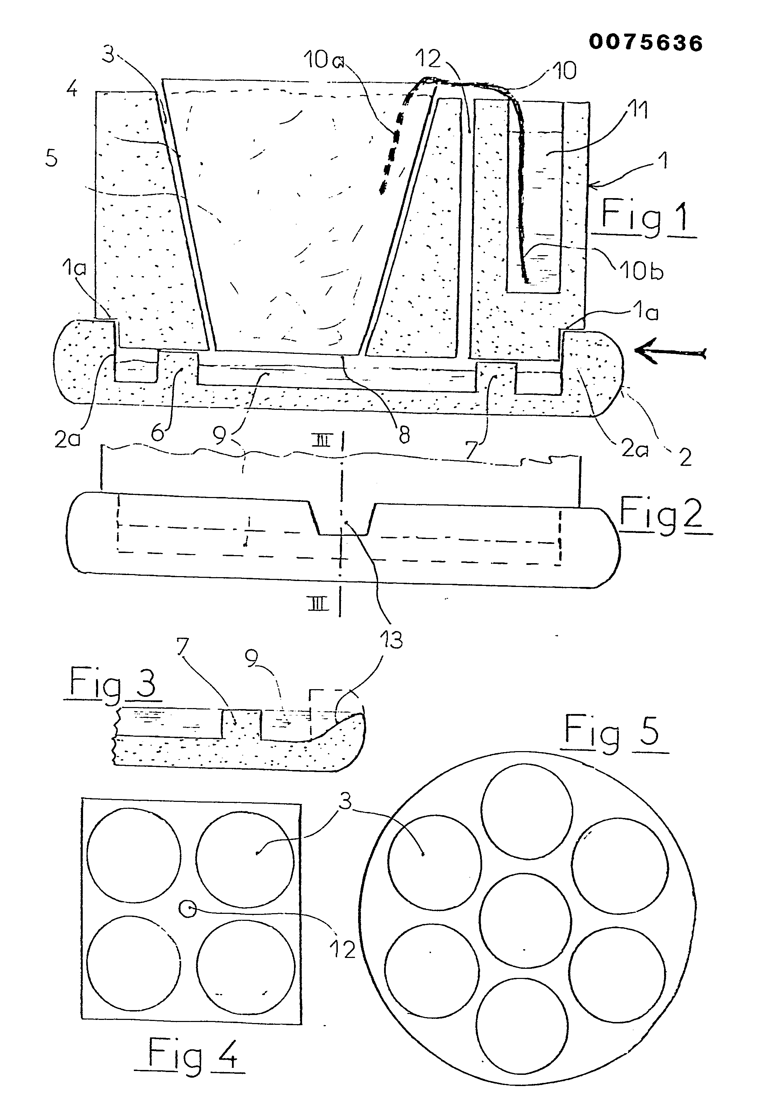

Le dispositif selon l'invention, montré en coupe sur la figure 1, est composé d'une partie supérieure 1, formant le corps, et d'une partie inférieure 2 formant le plateau ; ledit corps 1 comporte un alvéole 3 recevant un récipient 4 tel qu'un pot, contenant de la terre 5 et une plante (non représentée). Ledit corps 1 repose sur le plateau 2 d'une part sur son bord 2a et d'autre part, sur les pots 6 et 7. Le plateau 2 est creux et constitue avec le corps 1, une capacité 8 apte à former une réserve d'eau 9. L'alvéole 3 peut être de forme quelconque : cylindrique, conique ou carrée, par exemple. De préférence, la forme de l'alvéole 3 est complémentaire de celle du pot 4. Le pot 4 est maintenu par frottement sur les parois intérieures de l'alvéole 3 ou bien repose sur le bord supérieur dudit alvéole grâce à un épaulement disposé sur le bord supérieur dudit pot (voir la figure 9).

Le corps 1 et le plateau 2 sont solidaires par frottement de leur bord respectivement 1a et 2a . A cet effet, la base du corps 1 est munie avantageusement d'une partie rétrécie, emboîtée à force sur le bord 2a complémentaire du plateau 2.

Le dispositif est réalisé en une matière synthétique, telle que du polystyrène expansé par exemple. Ce matériau donne audit dispositif selon l'invention les avantages d'être léger et de réalisation économique et facile.

La forme générale du corps et du plateau associé, peut être quelconque : ronde ou carrée par exemple.

Le nombre et la forme des alvéoles sont également quelconque; avantageusement, ceux-ci sont disposés selon leur nombre et forme, de telle façon que la perte de matière soit minimum. Ceci permet de réduire le coût et le poids dudit corps et d'obtenir une densité de plantes maximum (voir les figures 4, 5 et 6).

On peut également disposer des alvéoles de formes différentes dans le corps d'un même dispositif, ou un seul alvéole apte à recevoir plusieurs pots (voir la figure 6).

Afin d'assurer la conservation des plantes par un entretien minimum, le dispositif est muni de moyens permettant d'alimenter en eau lesdites plantes de façon régulière.

Ces moyens sont constitués d'au moins une mèche 10, dont l'extrémité libre 10a est en contact avec la terre du pot 4, l'autre extrémité 10b étant immergée dans un réservoir d'eau 11 disposé dans le corps 1. L'eau dudit réservoir 11 monte par capillarité le long de ladite mèche 10 jusqu'à son extrémité libre 10a en contact avec la masse de terre 5 du pot 4.

Selon l'invention, on voit que l'interchangeabilité des pots dans le corps est associée à la possibilité d'alimentation continue en eau des plantes par le dessus ; les mèches sont facilement et rapidement enlevées et replacées à chaque enlèvement et mise en place d'un pot.

De plus, ces moyens d'alimentation en eau, constitués de mèches, sont très simples de conception et d'utilisation.

On a montré en coupe sur la figure 9 une variante de réalisation du dispositif selon l'invention. Celui-ci comporte deux alvéoles 3 et 3' recevant respectivement deux pots 4 et 4', et une cheminée 12 reliant la face supérieure du corps 1 et la capacité 8 remplie d'eau.

Les mèches 10 et 10', dont une des extrémités est en contact avec la terre contenue dans les pots 4 et 4', traversent ladite cheminée 12, tandis que leur seconde extrémité est immergée dans l'eau de la capacité 8.

Ces mèches sont particulièrement utiles pour la conservation des plantes, dans les points de vente par exemple où les plantes sont entreposées et/ou exposées pendant une période de temps relativement longue.

La facilité et la rapidité avec lesquelles les pots sont placés dans les alvéoles 3 d'un même dispositif, permettent aux utilisateurs de composer et de créer un ensemble de plantes selon leurs goûts et fantaisies. Cette composition, qui peut être effectuée sur le lieu de vente même par exemple, est réalisée rapidement et sans désagréments pour l'utilisateur du fait que celui-ci n'a pas à manipuler la terre. L'utilisateur pourra modifier, compléter ou alléger l'ensemble de plantes réunies dans un même dispositif.

Avantageusement, le plateau 2 est muni d'un trop-plein 13 empêchant la réserve d'eau 9 de dépasser un niveau donné. Ce niveau peut par exemple correspondre à la base des pots. Ledit trop-plein 13, constitué d'un bec verseur, évite aux plantes d'être noyées, ce qui serait évidemment défavorable à leur croissance.

Afin d'assurer une meilleure utilisation du dispositif selon l'invention, celui-ci comporte des moyens de calage permettant d'ajuster les dimensions des alvéoles et des pots (voir les figures 7 et 8). Ces moyens sont constitués d'un jeu de cales 14, 15, 16 et 17 (au nombre de quatre par alvéole par exemple) longiformes et placées chacune dans un logement disposé sur le bord intérieur des alvéoles de telle manière qu'elles fassent saillie par rapport à la surface intérieure desdites alvéoles.

Ainsi, si l'on place un pot 18, de dimensions plus petites que celles de l'alvéole correspondant, celui-ci viendra porter contre lesdites cales 14.

On peut ajuster les dimensions des pots aux alvéoles en faisant varier le nombre et la largeur desdites cales.

Dans le cas de pots et alvéoles coniques, les moyens d'ajustement peuvent être constitués d'anneaux concentriques de différents diamètres intérieurs et extérieurs, entourant le pot et venant porter contre la surface intérieure desdits alvéoles.

Quoique l'on ai décrit ci-dessus des exemples de réalisation concernant la culture de plantes au moyen de terre, il va de soit que la présente invention n'est pas limitée à ce mode de culture et peut être appliquée à d'autres modes, tels que par exemple l'hydroculture.

REVENDICATIONS

1.- Dispositif d'irrigation de plantes en pot (4) comportant une réserve d'eau (9,11) et une mèche (10) assurant une communication capillaire entre ledit réservoir (9,11) et ledit pot (4), caractérisé en ce que ladite mèche (10) relie la réserve d'eau (9,11) à la partie supérieure du pot (4).

2.- Dispositif selon la revendication 1, permettant de contenir, rassembler et irriguer un ensemble de pots individuels pour la culture de plantes, caractérisé en ce qu'il est constitué d'un ensemble comportant au moins un alvéole (3) dont les parois sont conformées de façon à constituer le logement récepteur d'au moins un pot individuel (4), au moins une capacité apte à recevoir une réserve d'eau (9,11) et une pluralité de mèches (10) en contact avec ladite réserve d'eau (9,11) par une extrémité et avec la partie supérieure interne d'un pot par l'autre extrémité et aptes à transférer par capillarité l'eau depuis la réserve (9,11) vers chaque pot individuel (4).

3.- Dispositif selon la revendication 2, caractérisé en ce qu'il est constitué d'un bloc unitaire.

4.- Dispositif selon la revendication 2, caractérisé en ce qu'il est constitué d'un plateau inférieur (2) à bords relevés, dont le fond forme une réserve d'eau (9), associé à un corps (1) comportant les alvéoles (3) formant les logements desdits pots individuels (4).

5.- Dispositif selon l'une des revendications 1 à 4, caractérisé en ce qu'il comporte au moins une cheminée (12), reliant sa partie supérieure et la capacité (9) formant une réserve d'eau et contenant au moins une mèche (12) dont l'extrémité inférieure est immergée dans ladite réserve d'eau (9) et dont l'extrémité supérieure libre est apte à humidifier en partie supérieure du pot (4).

6.- Dispositif selon l'une des revendications 1 à 5, caractérisé en ce qu'il comporte des moyens de calage permettant d'ajuster les dimensions des alvéoles aux pots correspondants.

7.- Dispositif selon l'une des revendications 3 à 6, caractérisé en ce que le plateau (2) comporte des moyens (13) empêchant l'eau contenue dans la capacité de dépasser un niveau donné.

8.- Dispositif selon l'une des revendications 3 à 7, caractérisé en ce que le corps (1) comporte à sa base une partie rétrécie (1a) apte à être emboîtée à force à l'intérieur des bords du plateau (2).

0075636

Fig 1

Fig 2

Fig 3

Fig 4

Fig 5

0075636

Fig 7

Fig 8

Fig 9

Fig 6

## DOCUMENTS CONSIDERES COMME PERTINENTS

| Catégorie | Citation du document avec indication, en cas de besoin, des parties pertinentes | Revendication concernée |
|---|---|---|
| X | <u>FR - A - 523 640</u> (PINSON) <br> * Totalité du brevet * | 1 |
| | -- | |
| X | <u>GB - A - 1 400 450</u> (LAIDMAN <u>TEMPLE</u>) <br> * Totalité du brevet * | 1,2 |
| | -- | |
| X | <u>FR - A - 2 190 356</u> (FERRAND) <br> * Page 1, ligne 26 à page 2, ligne 24 - figures 1,2,3 * | 1,2, 3 |
| | ---- | |

**CLASSEMENT DE LA DEMANDE (Int. Cl. 3)**

A 01 G 27/00

**DOMAINES TECHNIQUES RECHERCHES (Int. Cl. 3)**

A 01 G 27/00

**CATEGORIE DES DOCUMENTS CITES**

X: particulièrement pertinent à lui seul
Y: particulièrement pertinent en combinaison avec un autre document de la même catégorie
A: arrière-plan technologique
O: divulgation non-écrite
P: document intercalaire
T: théorie ou principe à la base de l'invention
E: document de brevet antérieur, mais publié à la date de dépôt ou après cette date
D: cité dans la demande
L: cité pour d'autres raisons

&: membre de la même famille, document correspondant

X | Le présent rapport de recherche a été établi pour toutes les revendications

| Lieu de la recherche | Date d'achèvement de la recherche | Examinateur |
|---|---|---|
| La Haye | 28-05-1982 | HERYGERS |

OEB Form 1503.1  06.78